# DEMANDE DE BREVET EUROPEEN

(11) **EP 4 556 790 A1**
(43) Date de publication de la demande: **21.05.2025**
(21) Numéro de dépôt: 24211772.9
(22) Date de dépôt: 08.11.2024
(51) Int. Cl.: F21V 21/04, E04B 9/00, F21V 23/06, H02G 3/20, F21V 25/12, F21S 8/06

(54) **ACCESSOIRE DE SUSPENSION D'UN LUMINAIRE DE PLAFOND POUR BOÎTE D ENCASTREMENT, ENSEMBLE D'INSTALLATION D'UN LUMINAIRE DE PLAFOND COMPRENANT UN TEL ACCESSOIRE DE SUSPENSION, ET BOÎTIER ÉLECTRIQUE POUR LUMINAIRE DE PLAFOND COMPRENANT UNE BOÎTE D ENCASTREMENT ET UN TEL ENSEMBLE D'INSTALLATION**

(30) Priorité: 14.11.2023 FR 2312475
(71) Demandeur: Legrand France, 87000 Limoges (FR); Legrand SNC, 87000 Limoges (FR)
(72) Inventeur: BUISSON, Philippe, 87000 Limoges (FR); LACOSTE, Alain, 87000 Limoges (FR); VIDALINC, Julien, 87000 Limoges (FR)
(74) Mandataire: Jacobacci Coralis Harle

(57) **Abrégé**

L'invention concerne un accessoire de suspension (10) d'un luminaire de plafond pour boîte d'encastrement (200) comprenant :
- une pièce d'accrochage (500) du luminaire, et
- un bouclier (400) adapté à fermer une ouverture avant (211A) de la boîte d'encastrement et qui comporte une ouverture (401) prévue pour donner accès à un module de connexion électrique (300) du luminaire agencé dans la boîte d'encastrement.

Selon l'invention l'accessoire comprend un élément axial (100) métallique adapté à être engagé dans la boîte d'encastrement et qui comporte :
- un moyen de fixation arrière (110) prévu pour recevoir une partie d'extrémité libre d'un câble de maintien (3), et
- un moyen de fixation avant (120) agencé pour recevoir la pièce d'accrochage ;
le bouclier et la pièce d'accrochage sont métalliques ; et
le bouclier est fixé à l'élément axial.

## Description

La présente invention concerne, de manière générale, le domaine des appareillages électriques.

L'invention concerne plus particulièrement un accessoire de suspension d'un luminaire de plafond pour boîte d'encastrement comprenant :
- une pièce d'accrochage du luminaire, et
- un bouclier adapté à fermer une ouverture avant de la boîte d'encastrement et qui comporte une ouverture prévue pour donner accès à un module de connexion électrique du luminaire agencé dans la boîte d'encastrement.

L'invention concerne aussi un ensemble d'installation d'un luminaire de plafond pour boîte d'encastrement comprenant un tel accessoire et un boîtier électrique pour luminaire de plafond comprenant ledit ensemble d'installation rapporté dans une boîte d'encastrement.

Les normes actuelles de ces ensembles d'installation imposent de prévoir une reprise de charge de 25 kg lors de l'installation d'un luminaire au plafond. Ainsi, il est généralement prévu d'installer un câble de maintien qui se fixe, d'un côté, à un élément de structure du bâtiment caché par le plafond (alors couramment appelé « faux-plafond »), et, de l'autre, à une boîte d'encastrement. La boîte d'encastrement ainsi fixée au plafond offre alors, d'une part, un point d'accroche pour le luminaire via la pièce d'accrochage du luminaire qui est elle-même fixée à ladite boîte, et, d'autre part, un point de connexion électrique via le module de connexion agencé dans ladite boîte.

Les normes actuelles de parois coupe-feu imposent également de redonner sa performance coupe-feu d'origine à une cloison sèche, ici le plafond, qui a été percée de l'orifice nécessaire à la mise en place de la boîte d'encastrement, c'est-à-dire empêcher le feu de traverser la cloison sèche pendant une durée prédéfinie (par exemple 30 ou 60 minutes). Pour cela, il est connu de placer à l'intérieur de la boîte d'encastrement un matériau intumescent qui peut se présenter sous la forme d'un patch. Lorsque le matériau intumescent est exposé à la chaleur, ce dernier gonfle et obstrue alors les ouvertures d'entrée de gaine de la boîte d'encastrement, ce qui permet de chasser l'air et d'empêcher le passage des flammes et des gaz au travers de celles-ci.

On connaît du document FR3118082 une boîte d'encastrement coupe-feu pour luminaire de plafond qui est elle-même partiellement réalisée dans un matériau intumescent. Dans cette boîte d'encastrement, le rappel de charge est quant à lui réalisé au moyen d'un étrier en forme de U à la base duquel vient se fixer le câble de maintien. Les deux branches de l'étrier servent ensuite à fixer la paroi latérale périphérique de la boîte d'encastrement. Il est ensuite prévu qu'un crochet pour l'accrochage du luminaire soit fixé au bouclier fermant la boîte d'encastrement.

Toutefois, dans cette boîte d'encastrement coupe-feu pour luminaire, la reprise de charge n'est pas conservée en cas d'incendie car le luminaire est solidaire du câble de maintien via des pièces en matériau plastique : bouclier, paroi latérale périphérique, crochet. Le luminaire est donc susceptible de tomber rapidement au sol en cas d'incendie. De plus, le matériau intumescent peut lui aussi tomber au sol en cas de détérioration du bouclier sous l'effet de la chaleur et de la gravité.

Dans le domaine général des boîtes d'encastrement, on connaît du document DE661620 une boîte d'encastrement présentant un rappel de charge sous forme d'une vis à bois traversant une paroi arrière du boîtier pour se fixer dans une poutre. A l'avant, la vis à bois comporte un filetage interne permettant de retenir un crochet pour la suspension du luminaire. Toujours à l'avant, le boîtier est fermé par un couvercle qui est fixé au crochet via un anneau. Selon le document DE661620, le couvercle est traversé par des fiches électriques reliées au câble d'alimentation du luminaire, il est donc forcément réalisé en un matériau isolant électriquement. On connaît également les documents FR3060101 et FR3097083 qui divulguent quant à eux des boîtes d'encastrement ne présentant aucune propriété coupe-feu, comportant des rappels de charge avec câble de maintien. En effet, chacun des documents FR3060101 et FR3097083 divulgue une boîte d'encastrement comportant un couvercle de fermeture en matériau plastique. Ce couvercle forme une pièce monobloc avec le module de connexion électrique délimitant le puits de connexion et logeant, au fond du puits, les bornes de connexion.

Par rapport à l'état de la technique précité, la présente invention propose un accessoire de suspension d'un luminaire grâce auquel ledit luminaire est relié directement au câble de maintien au moyen d'un ensemble de pièces métalliques.

Plus particulièrement, selon l'invention, il est proposé un accessoire de suspension selon la revendication 1

Grâce à l'élément axial métallique et à la pièce d'accrochage métallique, le luminaire est ainsi arrimé directement à la structure du bâtiment par des éléments métalliques. Cela permet de retarder significativement une éventuelle chute du luminaire en cas d'incendie.

De plus, le bouclier étant lui-aussi une pièce métallique, il résiste aux flammes plus longtemps qu'une pièce plastique et peut donc empêcher plus longtemps le matériau intumescent de tomber au sol. Du fait de sa nature métallique, il contribue aussi, en lui-même, à prévenir le passage des flammes. Avantageusement, le bouclier métallique est lui aussi relié au câble de maintien par un élément métallique, à savoir l'élément axial, ce qui lui permet continuer à assurer la reprise de charge et de remplir efficacement les deux rôles précités (retenir le matériau intumescent et prévenir le passage des flammes).

D'autres caractéristiques de l'accessoire de suspension conforme à l'invention sont énoncées dans les revendications 2 à 8.

L'invention propose également un ensemble d'installation d'un luminaire de plafond pour boîte d'encastrement selon la revendication 9.

D'autres caractéristiques de l'ensemble d'installation conforme à l'invention sont énoncées dans les revendications 10 et 11.

L'invention propose enfin un boîtier électrique selon la revendication 12.

D'autres caractéristiques du boîtier électrique conforme à l'invention sont énoncées dans les revendications 13 à 16.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique éclatée en perspective d'un boîtier électrique selon l'invention,
- la figure 2 est une vue schématique assemblée en coupe de côté du boîtier électrique de la figure 1, et
- la figure 3 est une vue schématique assemblée en perspective arrière du boîtier électrique de la figure 1.

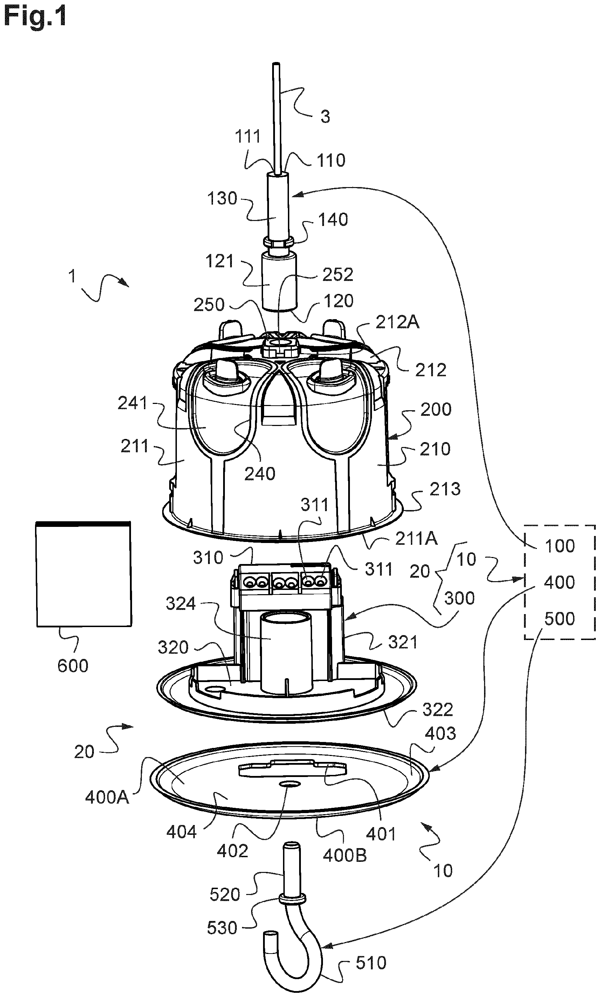

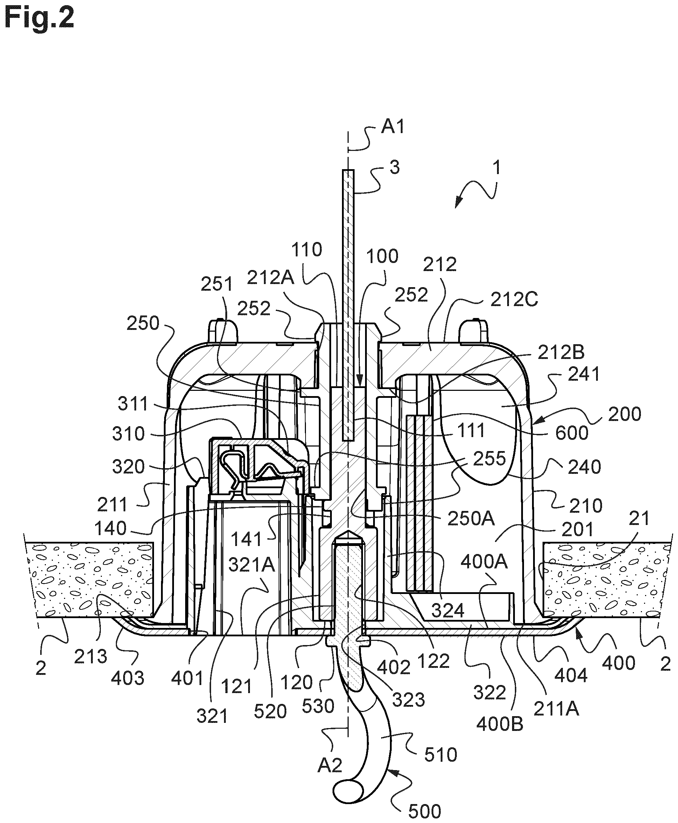

Sur les figures 1 à 3, on a représenté un boîtier électrique 1 pour luminaire de plafond conforme à l'invention. Un tel boîtier électrique 1, communément appelé DCL (pour « Dispositif de Connexion de Luminaire »), est prévu pour être encastré dans une paroi de faux-plafond 2 (voir figure 2) afin de permettre la suspension et la connexion d'un luminaire (non représenté).

Dans la description qui va suivre, par convention, le terme « avant » désignera le côté du boîtier électrique 1 orienté vers l'installateur, c'est-à-dire tourné vers le bas. Le terme « arrière » désignera le côté opposé. Le terme « intérieur » désignera quant à lui le côté tourné vers le centre du boîtier électrique 1 et le terme « extérieur » le côté opposé.

Le boîtier électrique 1 est spécialement conçu pour être rapporté dans une paroi sèche, ici dans une paroi de faux-plafond 2.

On rappelle à ce sujet que, de manière connue, une telle cloison ou paroi sèche, aussi appelée cloison ou paroi creuse, est généralement composée d'une ossature métallique (formée de montants verticaux et/ou de rails horizontaux) et de panneaux de plâtre rapportés sur l'une au moins des deux faces de l'ossature métallique. La cavité pratiquée dans cette paroi sèche pour accueillir le boîtier électrique 1 est alors simplement formée par une ouverture circulaire 21 réalisée à la scie cloche dans l'un des panneaux de plâtre de la paroi de faux-plafond 2 (voir figure 2).

Le boîtier électrique 1 est adapté à être raccordé à la structure du bâtiment au moyen d'un câble de maintien 3. La formulation « adapté à être raccordé » signifie ici qu'il est spécifiquement conçu pour être raccordé à la structure du bâtiment via le câble de maintien 3.

Comme le montre la figure 1, le boîtier électrique 1 comprend :
- une boîte d'encastrement 200 ;
- un élément axial 100 ;
- un module de connexion électrique 300 permettant d'y connecter le luminaire ;
- un bouclier 400 ; et
- une pièce d'accrochage 500 du luminaire permettant d'y suspendre le luminaire.

Comme le montrent les figures 1 à 3, la boîte d'encastrement 200 est tout à fait classique, elle sert à la protection, à la fixation et au câblage de l'appareillage électrique. Le volume intérieur 201 de la boîte d'encastrement 200 permet de loger le socle du mécanisme d'appareillage et d'y réaliser son câblage.

Pour l'essentiel, la boîte d'encastrement 200 comprend un corps 210 qui présente une forme générale cylindrique autour d'un axe central A1 (voir figure 2), mais qui pourrait bien entendu présenter une forme différente, notamment parallélépipédique.

Comme le montrent les figures 1, 2 et 3, le corps 210 de la boîte d'encastrement 200 comporte une paroi latérale 211 globalement tubulaire de révolution et une paroi de fond 212 qui ferme la boîte d'encastrement 200 à l'arrière. La boîte d'encastrement 200 est ouverte à l'avant par une ouverture avant 211A opposée à la paroi de fond 212. Le corps 210 délimite ainsi, entre la paroi latérale 211, la paroi de fond 212 et l'ouverture avant 211A, le volume intérieur 201 (voir la figure 2) de la boîte d'encastrement 200 qui permet notamment d'accueillir le module de connexion électrique 300 ainsi que les fils électriques provenant du réseau, nécessaires à son câblage.

Pour sa fixation dans l'ouverture circulaire pratiquée dans le panneau de plâtre de la cloison sèche, le corps 210 de la boîte d'encastrement 200 comporte un trottoir extérieur 213 qui longe extérieurement le bord de l'ouverture avant 211A et qui est adapté à prendre appui contre la face avant du panneau de plâtre, tout autour de l'ouverture circulaire. Ce trottoir extérieur 213 permet de bloquer le corps 210 de la boîte d'encastrement 200 vers l'arrière dans la paroi sèche.

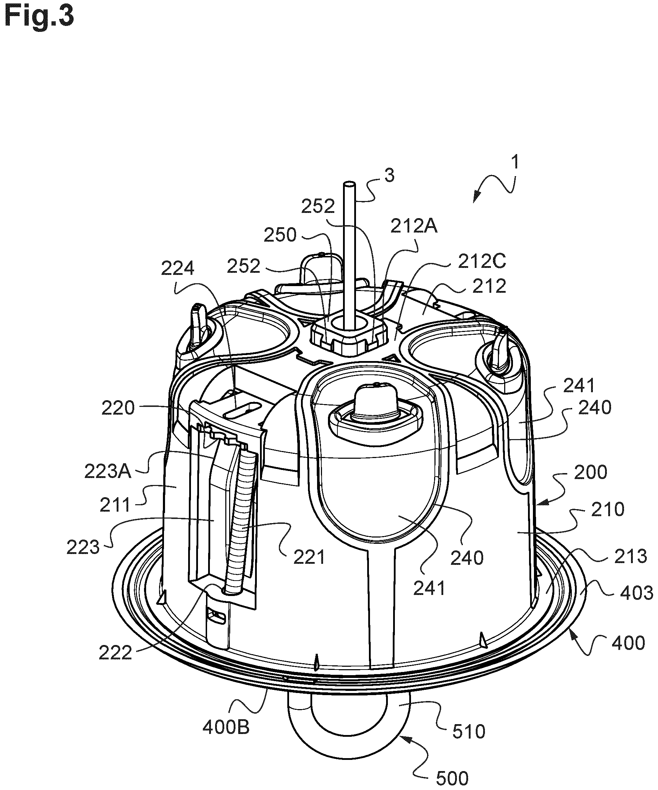

Comme le montre plus particulièrement la figure 3, pour bloquer le corps 210 vers l'avant dans la paroi sèche, la boîte d'encastrement 200 est équipée de deux vis 221 et griffes 220 qui interviennent en position diamétralement opposée sur la face externe de la paroi latérale 211. Chaque vis 221, à l'extrémité libre de laquelle est vissée une griffe 220, traverse des aménagements prévus dans la paroi latérale 211, à savoir une cheminée 222 débouchant à l'avant de la boîte d'encastrement 200 et maintenant la tête de ladite vis 221 de sorte que ladite vis est seulement libre en rotation autour de son axe (et donc bloquée en translation), un renfoncement 223 de la face externe de la paroi latérale 211, et un orifice 224 opposé au débouché de ladite cheminée dans le renfoncement 223. Il est prévu une rampe 223A au fond de chaque renfoncement 223, dont une partie est inclinée. Une fois mise en place, chaque griffe 220 est partiellement logée dans un renfoncement 223 en appui contre la rampe 223A. Chaque griffe 220 est bloquée en rotation dans le renfoncement 223 tandis que chaque vis 221, libre en rotation autour de l'axe de son corps fileté, est fixe en translation. Le montage est classiquement ainsi fait que la rotation de chaque vis 221 dans la cheminée 222 entraîne un déplacement en translation de la griffe 220 correspondante le long du corps fileté de la vis 221. Lors de son déplacement chaque griffe 220 glisse sur la rampe 223A prévue au fond du renfoncement 223 pour sortir hors du renfoncement 223, en saillie de la face externe de la paroi latérale 211 de la boîte d'encastrement 200, et venir se plaquer ou s'accrocher sur la face arrière du panneau de plâtre de la paroi de faux-plafond 2.

La boîte d'encastrement 200 comporte par ailleurs une pluralité d'entrées de gaines de cheminement de câbles. Une telle gaine (non représentée) loge les câbles et/ou les fils électriques issus du réseau électrique local. Telle que représentée sur les figures, la boîte d'encastrement 200 comporte quatre entrées de gaine de cheminement de câble. Chaque entrée est une ouverture de passage 240 s'étendant en partie sur la paroi latérale 211 du corps 210 de la boîte d'encastrement 200 et en partie sur la paroi de fond 212 du corps 210 de la boîte d'encastrement 200. Le contour de chaque ouverture de passage 240 est globalement oblong.

Chaque ouverture de passage 240 est fermée par un opercule 241 déchirable ou transperçable. Cet opercule 241 est constitué par une membrane souple (du type de celles commercialisées par les demanderesses sous la référence « Batibox^{™} »).

Le corps 210 est réalisé en matériau plastique rigide (typiquement en polypropylène). Les membranes souples sont réalisées en un matériau thermoplastique plus souple (typiquement en SEBS acronyme de Styrène Ethylène Butylène Styrène) surmoulé sur le matériau rigide.

Selon une des caractéristiques particulièrement avantageuses de l'invention, l'élément axial 100 est une pièce monobloc métallique, adaptée à être engagée dans la boîte d'encastrement 200.

Cet élément axial 100 comporte :
- un moyen de fixation arrière 110 prévu pour recevoir une partie d'extrémité libre du câble de maintien 3, et
- un moyen de fixation avant 120 agencé pour recevoir la pièce d'accrochage 500.

Comme le montrent les figures 1 et 2, l'élément axial 100 comprend plus particulièrement une structure longitudinale 130 globalement cylindrique formant, à l'arrière, un passage axial 111 constituant le moyen de fixation arrière 110 et, à l'avant, un fourreau 121 constituant ledit moyen de fixation avant 120. L'élément axial 100 présente un diamètre plus grand à l'avant, au niveau du fourreau 121, qu'à l'arrière, au niveau du passage axial 111.

Le fourreau 121 comporte intérieurement un logement axial 122 globalement cylindrique adapté à recevoir une portion d'extrémité rectiligne 520 de la pièce d'accrochage 500. Le logement axial 122 est taraudé et la portion d'extrémité rectiligne 520 de la pièce d'accrochage 500 est filetée de sorte qu'elle est vissée dans le logement axial 122 du fourreau 121.

Le passage axial 111 présente une forme adaptée à la partie d'extrémité libre du câble de maintien 3. La partie d'extrémité libre du câble de maintien 3 est fixée dans le passage axial 111 par sertissage. Comme le montre bien la figure 1, l'élément axial 100 forme ainsi un piton arrimé au câble de maintien 3.

Le logement axial 122 du moyen de fixation avant 120 est centré sur un axe de réception A2 (voir figure 2) et le passage axial 111 est agencé pour recevoir le câble de maintien 3 selon une direction parallèle audit axe de réception A2. Le passage axial 111 est plus particulièrement centré sur l'axe de réception A2. Le logement axial 122 et le passage axial 111 sont ainsi coaxiaux. Ainsi, la structure longitudinale 130 de l'élément axial 100 présente comme axe longitudinal de symétrie, l'axe de réception A2.

L'élément axial 100 comprend aussi une partie de montage qui est constituée d'un trottoir périphérique 140 s'étendant en saillie de la face externe de la structure longitudinale 130, c'est-à-dire sensiblement radialement par rapport à l'axe A2 tel que cela apparaît sur la figure 2.

La pièce monobloc que constitue l'élément axial 100 est avantageusement réalisée par usinage d'un bloc métallique tel qu'un bloc d'acier (qui peut être inoxydable).

L'élément axial 100 est monté dans le volume intérieur 201 de la boîte d'encastrement 200 de sorte qu'il s'étend selon l'axe central A1, entre la paroi de fond 212 du corps 210 et l'ouverture avant 211A de la boîte d'encastrement 200. Comme le montre la figure 2, lorsqu'il est monté dans la boîte d'encastrement 200, l'axe A2 de la structure longitudinale 130 de l'élément axial 100 est confondu avec l'axe A1 de la boîte d'encastrement 200.

Pour le montage de l'élément axial 100 dans la boîte d'encastrement 200, celle-ci est équipée d'un élément intermédiaire 250 tubulaire dont une partie arrière d'extrémité est fixée au corps 210 de la boîte d'encastrement 200.

L'élément intermédiaire 250 comporte une surface interne 250A cylindrique qui délimite un passage axial débouchant à chaque extrémité dudit élément intermédiaire 250.

Comme le montre plus particulièrement la figure 2, la partie arrière d'extrémité de l'élément intermédiaire 250 traverse une ouverture arrière 212A, circulaire, prévue au centre de la paroi de fond 212 du corps 210 de la boîte d'encastrement 200. Cette ouverture arrière 212A est centrée sur l'axe central A1. La partie arrière d'extrémité de l'élément intermédiaire 250 porte sur sa face externe une collerette d'arrêt 251 positionnée en butée contre une surface interne 212B de la paroi de fond 212 du corps 210 de la boîte d'encastrement 200, tout autour de l'ouverture arrière 212A, de manière à bloquer vers l'avant le corps 210 la boîte d'encastrement 200 contre l'élément intermédiaire 250. La partie arrière d'extrémité de l'élément intermédiaire 250 porte aussi des dents 252, plus spécifiquement quatre dents 252 dont deux sont visibles sur la figure 2, venant s'accrocher contre la surface externe 212C de la paroi de fond 212, autour de l'ouverture arrière 212A. La partie arrière d'extrémité de l'élément intermédiaire 250 est ainsi conçue pour être clipsée dans le corps 210 de la boîte d'encastrement 200, la paroi de fond 212 du corps 210 étant coincée entre les dents 252 et la collerette d'arrêt 251 de la partie arrière d'extrémité de l'élément intermédiaire 250.

Une fois clipsé, l'élément intermédiaire 250 s'étend dans le volume intérieur 201 de la boîte d'encastrement 200 de sorte que l'axe du passage axial délimité par sa surface interne 250A est confondu avec l'axe central A1 de la boîte d'encastrement 200.

Comme le montre la figure 2, une portion arrière de l'élément axial 100, ici la portion arrière située au niveau du passage axial 111 solidarisée au câble de maintien 3, est enfilée dans le passage axial de l'élément intermédiaire 250 de sorte que le câble de maintien 3 émerge à l'extérieur et à l'arrière de la boîte d'encastrement 200, pour être accessible à un installateur. L'élément intermédiaire 250 et l'élément axial 100 sont fixés l'un à l'autre par encliquetage autour du trottoir périphérique 140 de l'élément axial 100. Pour cela, une partie avant d'extrémité de l'élément intermédiaire 250 comprend deux fenêtres 255 en forme de U. Chaque fenêtre 255 est engagée, au niveau de la base de la forme en U, dans une gorge 141 formée entre le trottoir périphérique 140 et le fourreau 121 de l'élément axial 100. Cet engagement permet de bloquer vers l'arrière l'élément intermédiaire 250 sur l'élément axial 100. De plus, la surface interne 250A cylindrique de l'élément intermédiaire 250 présente un diamètre égal, au jeu de montage près, à celui de l'élément axial 100 au niveau du passage axial 111. Un bord d'extrémité de l'élément intermédiaire 250 se trouve donc en butée contre le trottoir périphérique 140 de l'élément axial 100, ce qui contribue à bloquer l'élément intermédiaire 250 vers l'avant sur l'élément axial 100.

Comme le montre la figure 1, le module de connexion 300 comprend un bornier 310 et un socle 320 réalisé en matériau isolant. Le bornier 310 comporte une pluralité de bornes de connexion 311 situées au fond d'un puits 321 latéral prévu dans le socle 320 et accessibles aux éléments de connexion d'une fiche du luminaire insérée dans le puits 321. Lorsque la module de connexion 300 est rapporté dans la boîte d'encastrement 200, le puits 321 est avantageusement positionné à distance de l'élément axial 100 métallique pour réduire les risques de court-circuit. Les bornes de connexion 311 du bornier 310 sont ainsi disposées à plus de 3 mm de l'élément axial 100.

Le bornier 310 est solidarisé au socle 320 par clipsage. Le bornier 310 est alimenté en courant par des fils électriques extraits d'une gaine électrique insérée dans le volume intérieur 201 de la boîte d'encastrement 200 au travers d'une de ses ouvertures de passage 240.

Le puits 321 du socle 320 débouche par une embouche 321A sur une paroi frontale 322 dudit socle 320 (voir figure 1).

La paroi frontale 322 du socle 320 présente la forme d'un disque dont la surface est supérieure à la surface de l'ouverture avant 211A de la boîte d'encastrement 200. La paroi frontale 322 présente une portion périphérique incurvée relevée vers l'arrière. Lorsque le module de connexion 300 est rapporté dans la boîte d'encastrement 200, la paroi frontale 322 ferme l'ouverture avant 211A de la boîte d'encastrement 200 et sa portion périphérique incurvée dépasse de la paroi latérale 211 du corps 210 de la boîte d'encastrement 200.

En outre, la paroi frontale 322 du socle 320 présente une ouverture centrale 323 pour le passage de la portion d'extrémité rectiligne 520 de la pièce d'accrochage 500. Lorsque le module de connexion 300 est monté dans la boîte d'encastrement 200, l'ouverture centrale 323 est centrée sur l'axe central A1 et placée en regard de l'entrée du logement axial 122 du fourreau 121 de l'élément axial 100. La section de l'ouverture centrale 323 est égale au jeu de montage près à la section de ladite portion d'extrémité rectiligne 520 de la pièce d'accrochage 500.

Enfin, la paroi frontale 322 du socle 320 porte sur sa face arrière une paroi centrale 324 cylindrique qui s'élève autour de l'ouverture centrale 323. Lorsque le module de connexion 300 est engagé dans la boîte d'encastrement 200, cette paroi centrale 324 entoure le fourreau 121 de l'élément axial 100 et est emmanchée sur la partie avant d'extrémité de l'élément intermédiaire 250 autour des fenêtres 255 pour maintenir de façon provisoire le module de connexion 300 en place dans le volume intérieur 201 de la boîte d'encastrement 200 (voir la figure 2).

Comme le montrent les figures 2 et 3, le bouclier 400 se présente sous la forme générale d'un disque. Il est réalisé avantageusement par emboutissage d'une feuille ou d'une plaque mince d'aluminium ou d'acier. Il présente des dimensions sensiblement supérieures à celles de la paroi frontale 322 du socle 320 du module de connexion 300 car il est adapté à recouvrir toute la face externe de cette paroi frontale 322 en débordant de celle-ci pour fermer ainsi l'ouverture avant 211A de la boîte d'encastrement 200. Il contribue alors à la performance coupe-feu de la boîte d'encastrement 200 notamment en bloquant le passage des flammes à travers l'ouverture avant 211A.

Comme cela apparaît bien sur la figure 1, le bouclier 400 présente, dans une zone décentrée, une première ouverture 401 dont le contour est identique au contour de l'embouchure 321A du puits 321 du socle 320 du module de connexion électrique 300 accueilli dans le volume intérieur 201 de la boîte d'encastrement 200. Cette première ouverture 401 est destinée à donner accès à ladite embouchure 321A et est adaptée à se placer en correspondance de celle-ci. Le bouclier 400 présente aussi en son centre, un deuxième orifice 402 dont la forme circulaire et les dimensions sont identiques ou similaires à celles de l'ouverture centrale 323 de la paroi frontale 322 du socle 320 du module de connexion 300. Ce deuxième orifice 402 est adapté à se placer en face de l'ouverture centrale 323 de la paroi frontale 322 du socle 320 pour être traversé par la partie d'extrémité rectiligne 520 de la pièce d'accroche 500.

Avantageusement, le bouclier 400, métallique, est fixé à l'élément axial 100. Ainsi, le bouclier 400 est lui-aussi arrimé au câble de maintien 3. La formulation « fixé à l'élément axial » signifie que le bouclier 400 est attaché à l'élément axial 100 en étant en contact direct ou indirect (par l'intermédiaire d'une tierce pièce) avec ce dernier. Lorsque le boîtier électrique 1 est encastré dans la paroi de faux-plafond 2, cela signifie que l'élément axial 100 contribue à retenir le bouclier 400 vers le haut. Le bouclier 400 est alors suspendu à l'élément axial 100.

Le bouclier 400 présente une portion périphérique 403 qui dépasse de la boîte d'encastrement 200. La portion périphérique 403 est incurvée vers l'arrière, ce qui signifie qu'elle se rapproche de la paroi de fond 212 du corps 210 de la boîte d'encastrement 200, de sorte à venir en appui de la paroi sèche. La portion périphérique 403 du bouclier 400 présente une forme annulaire ce qui permet ainsi de réaliser un rappel de charge sur la paroi sèche tout autour du pourtour de l'ouverture circulaire 21 prévue pour encastrer le boîtier électrique 1. Comme le montre la figure 1, cette portion périphérique 403 incurvée entoure une portion centrale 404 plane du bouclier si bien que le bouclier 400 présente plus spécifiquement une forme de coupelle (relativement plate). Cette forme de coupelle est particulièrement bien adaptée à retenir un matériau intumescent logé dans le volume intérieur 201 de la boîte d'encastrement 200.

Comme le montrent les figures 2 et 3, le bouclier 400 est fixé à l'élément axial 100 en étant maintenu entre l'élément axial 100 et la pièce d'accrochage 500, qui est avantageusement réalisée dans un matériau métallique plus spécifiquement en acier simple ou inoxydable. Cela signifie que le bouclier 400 est bloqué vers l'avant et vers l'arrière par l'élément axial 100 et la pièce d'accrochage 500, sans nécessairement être en contact direct avec ces derniers. Le bouclier 400 est ainsi pris en sandwich entre l'élément axial 100 et la pièce d'accrochage 500. En l'espèce, tel que cela est représenté sur la figure 2, le bouclier 400 est en contact direct avec la pièce d'accrochage 500 mais le module de connexion électrique 300 est interposé entre le bouclier 400 et l'élément axial 100.

Comme le montre la figure 1, la pièce d'accrochage 500 forme un crochet 500 métallique. Ce crochet 500 comporte une anse d'accrochage 510 courbe prolongée à une extrémité par une tige droite 520 qui forme ladite portion d'extrémité rectiligne de la pièce d'accrochage 500 conçue pour être vissée dans le logement axial 122 du fourreau 121 (formant le moyen de fixation avant 120 de l'élément axial 100). La tige droite 520 est donc pourvue du filetage complémentaire au taraudage du logement axial 122 (filetage non-représenté).

Comme le montre la figure 2, la tige droite 520 du crochet 510 traverse le bouclier 400 pour être fixée à l'intérieur du fourreau 121 de l'élément axial 100 (c'est-à-dire au moyen de fixation avant 120). La tige droite 520 est plus spécifiquement enfilée au travers du deuxième orifice 402 du bouclier 400 pour s'engager dans le logement axial 122 du fourreau 121. Le deuxième orifice 402 du bouclier 400 est centré sur l'axe central A1 (et donc aussi sur l'axe de réception A2).

L'élément axial 100 et la tige droite 520 du crochet 500 sont agencés dans le volume intérieur 201 de la boîte d'encastrement 200 et s'élèvent ainsi vers l'arrière à partir d'une face interne 400A du bouclier 400 tandis que l'anse d'accrochage 510 du crochet 500 s'étend vers l'avant à partir d'une face externe 400B du bouclier 400.

Afin de maintenir le bouclier 400, le crochet 500 comporte une collerette périphérique 530 agencée pour venir en butée contre la face externe 400B du bouclier 400. La collerette périphérique 530 s'étend en saillie de la tige droite 520 du crochet 500 sur toute la circonférence de ladite tige droite 520. La collerette périphérique 530 est prévue au niveau de la jonction entre l'anse d'accrochage 510 et la tige droite 520 du crochet 500. La collerette périphérique 530 bloque ainsi le bouclier 400 vers l'avant. En variante, le crochet pourrait être dépourvu de collerette périphérique, le bouclier étant alors bloqué par l'anse d'accrochage courbe du crochet.

L'élément axial 100, le bouclier 400 et la pièce d'accrochage 500 forment de façon remarquable un accessoire de suspension 10 du luminaire de plafond 2 qui est adapté à la boîte d'encastrement 200. Avantageusement, l'accessoire de suspension 10 est entièrement métallique et donc très résistant en cas d'incendie. L'accessoire de suspension 10, c'est-à-dire chacun de ses composants, est préférentiellement réalisé en acier. En variante, l'accessoire de suspension pourrait aussi être réalisé an acier galvanisé ou en aluminium.

En outre l'accessoire de suspension 10 et le module de connexion 300 forment un ensemble d'installation 20 du luminaire, c'est-à-dire un ensemble de suspension et de connexion du luminaire, qui est adapté à la boîte d'encastrement 200.

Avantageusement, le boîtier électrique 1 comprend un matériau intumescent 600 logé dans la boîte d'encastrement 200 derrière la paroi frontale 322 du socle 320 du module de connexion 300. Comme le montre bien la figure 2, le matériau intumescent 600 se présente sous la forme d'une plaque multicouches comportant trois couches. Bien qu'elle puisse présenter différentes positions et orientations dans le volume intérieur 201 de la boîte d'encastrement 200, tel que représenté sur la figure 2, la plaque de matériau intumescent 600 est positionnée sensiblement parallèlement à l'axe central A1 et à l'opposé du puits 321 du module de connexion 300 par rapport à l'axe central A1. En variante, le matériau intumescent pourrait se présenter sous la forme d'un patch souple collé contre la paroi de fond du corps de la boîte d'encastrement.

Le matériau intumescent 600 améliore la performance coupe-feu du boîtier électrique 1 puisque, lorsqu'il est exposé à la chaleur, il gonfle et obstrue les ouvertures de la boîte d'encastrement 200, notamment les ouvertures de passage 240. L'expansion du matériau intumescent 600 est amélioré par sa structure multicouche. En cas d'incendie, le risque que le matériau intumescent tombe au sol est faible grâce au bouclier 400 qui le retient dans la boîte d'encastrement 200.

Pour installer le boîtier électrique 1 dans la cavité pratiquée dans le panneau de plâtre de la paroi de faux-plafond 2, il convient tout d'abord d'insérer la partie d'extrémité libre du câble de maintien 3 dans le passage axial 111 de l'élément axial 100 et de l'y fixer par emmanchement.

La boîte d'encastrement 200 est ensuite agencée autour de l'élément axial 100, notamment en enfilant le câble de maintien 3 au travers de l'élément intermédiaire 250 jusqu'à encliqueter l'élément axial 100 dans l'élément intermédiaire 250 puis en emboîtant l'élément intermédiaire 250 dans l'ouverture arrière 212A de la boîte d'encastrement 200.

L'extrémité d'une gaine électrique (logeant des fils électriques) qui circule derrière la paroi de faux-plafond est alors tirée dans la cavité de la paroi de faux-plafond et introduite dans le volume intérieur 201 de la boîte d'encastrement 200 via une ouverture de passage 240 dont l'opercule 241 a été au moins partiellement déchiré. Les fils électriques sont tirés pour qu'une partie de ces fils électriques sorte de la gaine et entre dans le volume intérieur 201 de la boîte d'encastrement 200.

Le corps 210 de la boîte d'encastrement 200 est fixé dans le panneau de plâtre grâce au système de griffes 220 et les fils électriques issus de la gaine électrique peuvent alors être connectés aux bornes de connexion 311 du bornier 310.

Le module de connexion 300 est alors engagé dans la boîte d'encastrement 200. Le module de connexion 300 est maintenu de façon temporaire (c'est-à-dire jusqu'à la fixation du bouclier 400) par complémentarité de forme avec la boîte d'encastrement 200. Comme le montre la figure 2, une extrémité de la paroi centrale 324 cylindrique du module de connexion 300 est emmanchée autour de l'élément intermédiaire 250, en particulier autour des fenêtres 250. En variante, des moyens de clipsage du module de connexion avec la boîte d'encastrement pourraient être prévus.

Lors de l'engagement du module de connexion 300, le matériau intumescent 600 est positionné contre le module de connexion 300 de sorte à être engagé avec celui-ci dans la boîte d'encastrement 200. Il est ainsi supporté par la paroi frontale 322 su socle 320 du module de connexion 300.

Le câble de maintien 3 est alors fixé à la structure du bâtiment, par exemple par un installateur ayant accès aux combles, c'est-à-dire à l'arrière de la paroi de faux-plafond 2. Cet installateur peut typiquement former une boucle autour d'une poutre de la charpente avec le câble de maintien 3, ajuster la tension du câble de maintien 3, puis solidariser les deux brins de la boucle avec un élément de pincement métallique. La câble de maintien 3 peut aussi être équipé d'un embout adapté à être fixé par vissage dans un élément de structure du bâtiment.

Le bouclier 400 est enfin positionné et maintenu à l'élément axial 100 par vissage de la tige droite 520 du crochet 500 dans le logement axial 122 du fourreau 121 de l'élément axial 100. Ainsi fixé à l'élément axial 100, le bouclier 400 bloque alors module de connexion 300 (et le matériau intumescent 600) dans la boîte d'encastrement 200.

On soulignera que grâce à la paroi frontale 322 du socle 320 en matière isolante, les fils électriques introduits dans le volume intérieur 201 de boîte d'encastrement 200 et connectés aux bornes de connexion 311 ne peuvent pas entrer en contact avec le bouclier400 métallique.

L'invention n'est pas limitée au mode de réalisation décrit et représenté et toute variante conforme aux revendications annexées peut être prévue.

En particulier, le bouclier pourrait être fixé directement à l'élément axial, par exemple par vissage du bouclier autour de l'élément axial (l'un étant taraudé et l'autre fileté).

L'élément axial peut aussi comprendre plusieurs parties métalliques solidaires mais distinctes les unes des autres. Le fourreau de l'élément axial peut en particulier être formé par un tube rapporté sur la structure longitudinale de l'élément axial. Ce tube reçoit alors à une extrémité la structure longitudinale de l'élément axial et à l'autre extrémité la tige droite du crochet.

Le bouclier métallique pourrait être positionné non pas contre la paroi frontale du module de connexion mais à distance de cette dernière.

La pièce d'accrochage du luminaire pourrait aussi présenter un œillet métallique à la place du crochet, par exemple un œillet à vis prévu pour être vissé dans le fourreau de l'élément axial. La pièce d'accrochage pourrait aussi être rapportée sur l'élément axial autrement que par vissage, par exemple par encliquetage ou par un système quart de tour.

Le bouclier métallique peut être obtenu par simple découpe d'un flanc métallique, plutôt que par emboutissage. Il présenterait alors dans ce cas une forme essentiellement plane. Il peut aussi, au lieu d'être en contact direct avec le plafond, se situer à quelques millimètres de ce dernier.

La paroi frontale du module de connexion pourrait présenter un diamètre inférieur au diamètre de la boîte d'encastrement. La paroi frontale pourrait alors être située elle-même dans le volume intérieur de la boîte d'encastrement, c'est-à-dire en retrait de l'ouverture avant de cette dernière. Dans ce cas, le bouclier pourrait être de forme plane tout en se situant en contact direct avec le plafond, par exemple en l'affleurant.

Le niveau de résistance au feu de l'accessoire suspension peut être modifié par sélection des matériaux le constituant. Ainsi les éléments métalliques peuvent être réalisés en différents matériaux comme l'acier, l'acier inoxydable, l'aluminium ou un alliage d'aluminium, tel que le Zamak, ce dernier permettant notamment une réalisation par moulage.

Lorsque la boite d'encastrement présente une forme non cylindrique, le bouclier peut présenter une forme correspondante, non circulaire, telle qu'une forme carrée ou rectangulaire.

L'invention prévue pour une paroi sèche à base de plaques de plâtre peut également être utilisée avec d'autres types de parois sèches, par exemple une paroi à base de briques.

## Revendications

1. Accessoire de suspension (10) d'un luminaire de plafond pour boîte d'encastrement (200) comprenant :
- une pièce d'accrochage (500) du luminaire, et
- un bouclier (400) adapté à fermer une ouverture avant (211A) de la boîte d'encastrement (200) et qui comporte une ouverture (401) prévue pour donner accès à un module de connexion électrique (300) du luminaire agencé dans la boîte d'encastrement (200),
**caractérisé en ce que** l'accessoire de suspension (10) comprend un élément axial (100) métallique adapté à être engagé dans la boîte d'encastrement (200) et qui comporte :
- un moyen de fixation arrière (110) prévu pour recevoir une partie d'extrémité libre d'un câble de maintien (3), et
- un moyen de fixation avant (120) agencé pour recevoir la pièce d'accrochage (500) ;
**en ce que** le bouclier (400) et la pièce d'accrochage (500) sont métalliques ; et
**en ce que** le bouclier (400) est fixé à l'élément axial (100).

2. Accessoire de suspension (10) selon la revendication 1, dans lequel une partie (520) de la pièce d'accrochage (500) traverse le bouclier (400) pour être fixée au moyen de fixation avant (120) de l'élément axial (100) de sorte que le bouclier (400) est maintenu entre la pièce d'accrochage (500) et l'élément axial (100).

3. Accessoire de suspension (10) selon la revendication 2, dans lequel le moyen de fixation avant (120) de l'élément axial (100) comprend un logement axial (122) adapté à recevoir la partie (520) de la pièce d'accrochage (500) traversant le bouclier (400).

4. Accessoire de suspension (10) selon la revendication 3, dans lequel le logement axial (122) est cylindrique autour d'un axe de réception (A2) et dans lequel le moyen de fixation arrière (110) de l'élément axial (100) est agencé pour recevoir le câble de maintien (3) selon une direction parallèle audit axe de réception (A2).

5. Accessoire de suspension (10) selon l'une des revendications 2 à 4, dans lequel la pièce d'accrochage (500) présente une collerette périphérique (530) agencée pour être en butée contre une face externe (400B) du bouclier (400).

6. Accessoire de suspension (10) selon l'une des revendications 1 à 5, dans lequel le bouclier (400) présente une portion périphérique (403) qui dépasse de la boîte d'encastrement (200).

7. Accessoire de suspension (10) selon la revendication 6, dans lequel la portion périphérique (403) du bouclier (400) présente une forme annulaire.

8. Accessoire de suspension (10) selon la revendication 6 ou 7, dans lequel la portion périphérique (403) du bouclier (400) présente une forme plane ou incurvée vers la boîte d'encastrement (200).

9. Ensemble d'installation (20) d'un luminaire de plafond pour boîte d'encastrement (200) comprenant un accessoire de suspension (10) du luminaire selon l'une des revendications 1 à 8 et un module de connexion électrique (300) du luminaire adapté à être connecté au réseau électrique et comprenant un puits de connexion (321) dont l'embouchure (321A) est positionnée en correspondance de l'ouverture (401) dudit bouclier (400).

10. Ensemble d'installation (20) selon la revendication 9, dans lequel le module de connexion électrique (300) comprend une paroi frontale (322) adaptée à fermer l'ouverture avant (211A) de la boîte d'encastrement (200), le bouclier (400) recouvrant ladite paroi frontale (322).

11. Ensemble d'installation (20) selon l'une des revendications 9 et 10, dans lequel la paroi frontale (322) est réalisée en matériau électriquement isolant.

12. Boîtier électrique (1) pour luminaire de plafond comprenant :
- une boîte d'encastrement (200) comprenant une paroi de fond (212) et une paroi latérale (211) périphérique qui délimitent un volume intérieur (201) ouvert sur une ouverture avant (211A), l'ouverture avant (211A) étant opposée à la paroi de fond (212),
- un ensemble d'installation (20) du luminaire selon l'une des revendications 9 à 11, le module de connexion électrique (300) de l'ensemble d'installation (20) étant logé dans le volume intérieur (201) de la boîte d'encastrement (200), l'élément axial (100) métallique de l'ensemble d'installation (20) s'étendant dans le volume intérieur (201) de la boîte d'encastrement (200) entre la paroi de fond (212) et l'ouverture avant (211A).

13. Boîtier électrique (1) selon la revendication 12, dans lequel la paroi latérale (211) de la boîte d'encastrement (200) présente une forme cylindrique autour d'un axe central (A1) et dans lequel l'élément axial (100) s'étend le long dudit axe central (A1).

14. Boîtier électrique (1) selon l'une des revendications 12 et 13, dans lequel il est prévu un passage (212A) dans la paroi de fond (212) de la boîte d'encastrement (200) pour que le câble de maintien (3) entre dans le logement intérieur (201) de la boîte d'encastrement (200).

15. Boîtier électrique (1) selon l'une des revendications 12 à 14, dans lequel l'élément axial (100) est disposé à plus de 3 mm de bornes électriques (311) du module de connexion (300).

16. Boîtier électrique (1) selon l'une des revendications 12 à 15, comprenant un matériau intumescent logé dans la boîté d'encastrement (200).
